# EUROPÄISCHE PATENTSCHRIFT

(11) **EP 4 408 689 B1**
(45) Veröffentlichungstag und Bekanntmachung des Hinweises auf die Patenterteilung: **05.03.2025**
(21) Anmeldenummer: 22830720.3
(22) Anmeldetag: 06.12.2022
(51) Int. Cl.: B60K 1/00, B60K 17/02, B60K 17/16

(54) **ANTRIEBSVORRICHTUNG FÜR EINE FAHRZEUGACHSE**
DRIVE DEVICE FOR A VEHICLE AXLE
DISPOSITIF D'ENTRAÎNEMENT POUR ESSIEU DE VÉHICULE

(30) Priorität: 09.12.2021 DE 102021132494
(43) Veröffentlichungstag der Anmeldung: 07.08.2024
(73) Patentinhaber: Audi AG, 85045 Ingolstadt (DE)
(72) Erfinder: WEBER, Andreas, 85055 Ingolstadt (DE); GLOEDE, Harald, 85104 Pförring (DE); RÖTHLINGSHÖFER, Frank, 85055 Ingolstadt (DE); WEBER, Korbinian, 85049 Ingolstadt (DE); HOLZAPFEL, Christian, 85101 Lenting (DE)
(74) Vertreter: Bierschneider, Walter
(86) Internationale Anmeldenummer: PCT/EP2022/084494
(87) Internationale Veröffentlichungsnummer: WO 2023/104755

(56) Entgegenhaltungen:
- CN-A- 109 435 659
- DE-A1- 102017 220 096
- US-A1- 2020 231 050
- US-A1- 2020 262 481
- US-A1- 2020 353 982

## Beschreibung

Die Erfindung betrifft eine Antriebsvorrichtung für eine elektrifizierte Fahrzeugachse eines zweispurigen Fahrzeugs nach dem Oberbegriff des Anspruches 1.

Eine elektrifizierte Fahrzeugachse für ein zweispuriges Kraftfahrzeug weist eine Elektromaschine auf, die über ein Getriebe auf Flanschwellen abtreibt, die jeweils zu einem Fahrzeugrad führen.

Die Elektromaschine und das Getriebe sind Bestandteil eines Antriebsaggregats, das über eine Dreipunktlagerung oder eine Vierpunktlagerung zum Beispiel auf einem Hilfsrahmen der Fahrzeugkarosserie abgestützt ist. Das Getriebe weist eine Getriebestufe auf, über die die Elektromaschine mit einer Eingangsseite eines Achsdifferenzials trieblich verbunden ist. An deren Ausgangsseiten führen die Flanschwellen in Richtung des jeweiligen Fahrzeugrads.

In einer gattungsgemäßen Antriebsvorrichtung ist die Elektromaschine achsparallel zu den Flanschwellen angeordnet. Ein Statorgehäuse der Elektromaschine ist in der Fahrzeugquerrichtung mit einem Getriebegehäuse axial verlängert, in dem die Getriebestufe sowie das Achsdifferenzial angeordnet sind. Das gattungsgemäße Antriebsaggregat ist in einer Dreipunktlagerung über drei Aggregatelager in der Fahrzeugkarosserie abgestützt. Während des Fahrbetriebs werden von den Fahrzeugrädern über die Flanschwellen Reaktionskräfte in das Achsdifferenzial und somit in das Antriebsaggregat eingeleitet. Für eine betriebssichere Momentenabstützung der Reaktionskräfte muss die Dreipunktlagerung entsprechend bauteilsteif, bauraumintensiv sowie materialaufwendig ausgelegt sein. Dadurch können sich aufgrund der hohen Packagedichte im Fahrwerk Bauraumprobleme ergeben.

Aus der DE 10 2012 012 327 A1 ist eine Anordnung einer Elektromotoreinheit im Motorraum eines Kraftfahrzeugs bekannt. Aus der DE 100 21 044 B4 ist ein Fahrzeug mit daran montiertem Brennstoffzellensystem bekannt. Aus der EP 1 674 316 B1 ist eine Befestigungskonstruktion für einen Antriebsmotor bekannt. Aus der DE 699 14 973 T2 ist eine Anordnung für ein elektrisches Antriebsaggregat bekannt.

Das Dokument CN 109 435 659 A, das dem Gegenstand des Anspruchs 1 am nächsten kommt, zeigt eine Antriebsvorrichtung ähnlich wie die der vorliegenden Erfindung.

Die Aufgabe der Erfindung besteht darin, eine Antriebsvorrichtung für eine elektrifizierte Fahrzeugachse eines zweispurigen Fahrzeugs bereitzustellen, bei der die Dreipunktlagerung des Antriebsaggregats im Vergleich zum Stand der Technik mit reduziertem Bauteilaufwand, reduziertem Bauraumbedarf sowie reduziertem Materialaufwand realisierbar ist.

Die Aufgabe ist durch die Merkmale des Anspruches 1 gelöst. Bevorzugte Weiterbildungen der Erfindung sind in den Unteransprüchen offenbart.

Die Erfindung geht von einer Antriebsvorrichtung für eine elektrifizierte Fahrzeugachse eines zweispurigen Fahrzeugs aus. Diese weist ein Antriebsaggregat auf, in dem eine Elektromaschine über eine Getriebestufe mit einer Eingangsseite eines Achsdifferenzials trieblich verbunden ist. Das Achsdifferenzial treibt in der Fahrzeugquerrichtung beidseitig auf jeweils eine Flanschwelle ab, die zu einem Fahrzeugrad führt. Im Einbauzustand ist die Elektromaschine quer in der Fahrzeugachse eingebaut, das heißt achsparallel zu den Flanschwellen angeordnet. Ein Statorgehäuse der Elektromaschine ist in der Fahrzeugquerrichtung mit einem Getriebegehäuse axial verlängert, in dem die Getriebestufe und das Achsdifferenzial angeordnet sind. Das Antriebsaggregat ist in einer Dreipunktlagerung über genau drei Aggregatelager in der Fahrzeugkarosserie abgestützt. Im Fahrbetrieb werden von der Fahrbahn über die Flanschwellen Reaktionskräfte in das Achsdifferenzial und von dort weiter in das Antriebsaggregat geleitet. Ein Teil des Anspruches 1 betrifft eine Momentenabstützung dieser Reaktionskräfte, die im Vergleich zum Stand der Technik mit reduziertem Bauteilaufwand, reduziertem Bauraumbedarf sowie reduziertem Materialaufwand realisierbar ist. Hierzu weist die Dreipunktlagerung zwei getriebeseitige Aggregatelager auf, über die das Getriebegehäuse in der Fahrzeugkarosserie abgestützt ist. Die beiden getriebeseitigen Aggregatelager sind mit Bezug auf die Flanschwellen-Achse in der Fahrzeuglängsrichtung auf gegenüberliegenden Seiten angeordnet, wodurch in beiden Flanschwellen-Drehrichtungen eine Momentenabstützung bereitgestellt ist.

Erfindungsgemäß wird das Getriebegehäuse aus insgesamt zwei Gehäuseteilen aufgebaut, die in der Fahrzeugquerrichtung axial hintereinander angeordnet sind. Die beiden Gehäuseteile sind ein am Statorgehäuse angeflanschtes Zwischengehäuse sowie ein Gehäusedeckel, der den Getriebegehäuse-Innenraum schließt. Der Gehäusedeckel und das Zwischengehäuse weisen jeweils eine Lagerwand auf. Die Lagerwände des Gehäusedeckels und des Zwischengehäuses liegen einander in der Fahrzeugquerrichtung axial gegenüber. Zudem weisen die Lagerwände jeweils Lagerstellen für die Getriebewellen sowie für die Flanschwellen auf. Für eine stabile Drehlagerung der Getriebewellen sowie der Flanschwellen sind der Gehäusedeckel sowie das Zwischengehäuse entsprechend bauteilsteif realisiert. Um eine betriebssichere Abstützung des Antriebsaggregats zu erzielen, ist es erfindungsgemäß, dass von den beiden getriebeseitigen Aggregatelagern ein erstes getriebeseitiges Aggregatelager am Gehäusedeckel ausgebildet ist, während das zweite getriebeseitige Aggregatelager am Zwischengehäuse ausgebildet ist. Sowohl der Gehäusedeckel als auch das Zwischengehäuse können als Metallgussteile bereitgestellt sein, an denen die getriebeseitigen Aggregatelager jeweils materialeinheitlich und einstückig abgeformt sind. Für eine einwandfreie Drehlagerung der Getriebewellen sowie der Flanschwellen sind die Lagerwände des Gehäusedeckels und des Zwischengehäuses mit entsprechendem Materialaufwand bauteilsteif ausgeführt. In einer bevorzugten Ausführungsform kann das erste getriebeseitige Aggregatelager in einer Lagerwand-Ebene des Gehäusedeckels liegen, während das zweite getriebeseitige Aggregatelager in einer Lagerwand-Ebene des Zwischengehäuses liegen kann. Auf diese Weise wirken die Lagerwände des Gehäusedeckels und des Zwischengehäuses in Doppelfunktion auch als Schubfelder, in denen während des Fahrbetriebs deformationsfrei Reaktionskräfte eingeleitet werden können, wodurch eine äußerst bauteilsteife Momentenabstützung erzielt werden kann.

Infolge der Ausbildung der beiden Aggregatelager unmittelbar am Getriebegehäuse ergibt sich, in der Fahrzeugquerrichtung betrachtet, ein vergleichsweise geringer Querversatz (Hebelarmlänge) zum Achsdifferenzial, wodurch zum Beispiel Durchbiegungen oder Verwindungen des Antriebsaggregats aufgrund eingeleiteter Reaktionskräfte konstruktiv einfach unterbunden werden können.

Wie oben erwähnt, sind die erfindungsgemäßen getriebeseitigen Aggregatelager Bestandteile einer Dreipunktlagerung. Im Gegensatz zu den beiden getriebeseitigen Aggregatelagern ist ein drittes Aggregatelager unmittelbar am Statorgehäuse ausgebildet, um dessen Bauteilgewicht betriebssicher abzustützen.

Erfindungsgemäß wird jedes der Aggregatelager als ein Gummi-Metall-Hülsenlager ausgebildet, das in einem Befestigungsauge des Getriebegehäuses und/oder des Statorgehäuses eingepresst ist. Das Befestigungsauge kann jeweils materialeinheitlich und einstückig am Getriebegehäuse beziehungsweise am Statorgehäuse angeformt sein. Um eine besonders wirkungsvolle Momentenabstützung zu erzielen, ist es bevorzugt, wenn die Lagenachsen der beiden getriebeseitigen Aggregatelager sowie insbesondere zusätzlich des statorgehäuseseitigen Aggregatelagers achsparallel zur Flanschwelle-Achse ausgerichtet sind.

Nachfolgend ist ein Ausführungsbeispiel der Erfindung anhand der beigefügten Figuren beschrieben.

Es zeigen:
- Fig. 1: in einer schematischen Darstellung eine elektrifizierte Fahrzeugachse;
- Fig. 2: ein Antriebsaggregat in Alleinstellung;
- Fig. 3: in einer Detailansicht ein Statorgehäuse, ein Zwischengehäuse sowie einen Gehäusedeckel des Antriebsaggregats; und
- Fig. 4: ein schematisches Ersatzbild der Antriebsvorrichtung.

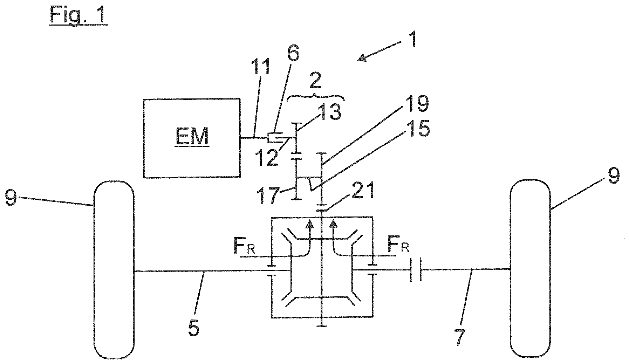

In der Fig. 1 ist eine elektrifizierte Fahrzeugachse gezeigt, deren Antriebsaggregat 1 eine Elektromaschine EM sowie ein Getriebe aufweist. Die Elektromaschine EM ist über eine Stirnradstufe 2 sowie über ein Achsdifferenzial 4 des Getriebes mit rechten und linken Flanschwellen 5, 7 verbunden, die zu Fahrzeugrädern 9 der Fahrzeugachse geführt sind. Eine Rotorwelle 11 der Elektromaschine EM ist über eine angedeutete Momentenkopplung 6 mit einer Getriebeeingangswelle 12 koaxial verbunden. Auf der Rotorwelle 11 sitzt drehfest ein Rotor 49, der mit einem drehfest am Statorgehäuse 23 angeordneten Stator 51 zusammenwirkt.

Auf der Getriebeeingangswelle 12 sitzt ein Festzahnrad 13, das Bestandteil der Stirnradstufe 2 ist. Das Festzahnrad 13 der Getriebeeingangswelle 12 kämmt mit einem auf einer Zwischenwelle 15 sitzenden Festzahnrad 17. Auf der Zwischenwelle 15 ist ein weiteres Festzahnrad 19 angeordnet, das wiederum mit einem eingangsseitigen Außenzahnrad 21 des Achsdifferenzials 4 in Zahneingriff ist. In der Figur 1 ist die Elektromaschine EM im Quereinbau verbaut, das heißt achsparallel zu den beiden Flanschwellen 5, 7 ausgerichtet.

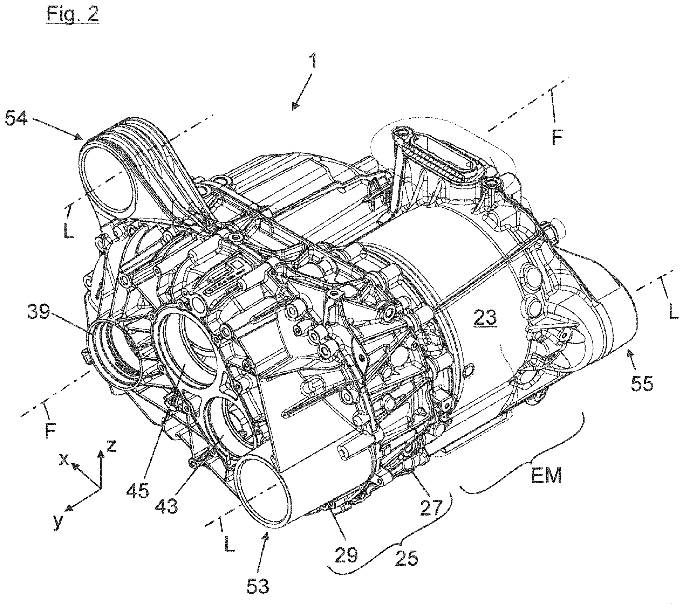

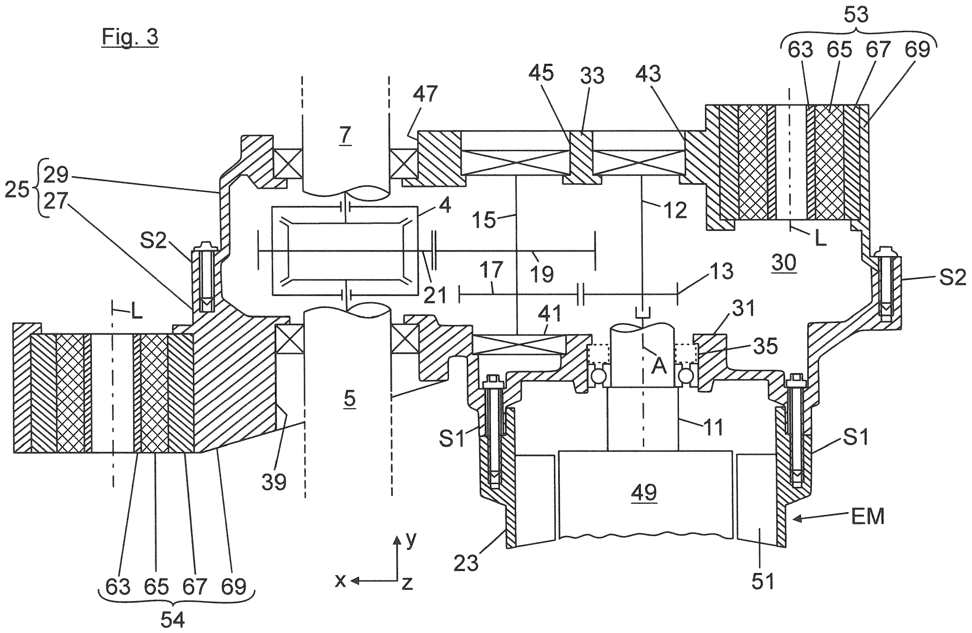

Wie aus den Fig. 2 und 3 weiter vorhergeht, weist die Elektromaschine EM ein zylindrisches Statorgehäuse 23 auf, das in der Fahrzeugquerrichtung y mit einem Getriebegehäuse 25 axial verlängert ist. Im Getriebegehäuse 25 sind sowohl die Stirnradstufe 2 als auch das Achsdifferenzial 4 angeordnet.

Das Getriebegehäuse 25 ist in den Fig. 2 und 3 zweiteilig aufgebaut, und zwar mit einem Zwischengehäuse 27 und einem Gehäusedeckel 29. Das Zwischengehäuse 27 ist gemäß der Fig. 3 an ersten Schraubstellen S1 stirnseitig am Statorgehäuse 23 angeflanscht. Demgegenüber ist der Gehäusedeckel 29 über zweite Schraubstellen S2 am Zwischengehäuse 27 angeflanscht. Der Gehäusedeckel 29 schließt in Axialrichtung den Getriebe-Innenraum 30 (Fig. 3). In der Fig.3 ist der Getriebe-Innenraum 30 in der Fahrzeugquerrichtung y durch eine Lagerwand 31 des Zwischengehäuses 27 und durch eine Lagerwand 33 des Gehäusedeckels 29 axial begrenzt. Die Lagerwand 31 des Zwischengehäuses 27 weist eine Lageröffnung 35 auf, in der die Rotorwelle 11 der Elektromaschine EM drehgelagert ist. Außerdem weist die Lagerwand 31 des Zwischengehäuses 27 einen Wellendurchtritt 39 auf, in der die linke Flanschwelle 5 drehgelagert ist. Ferner ist die Lagerwand 31 der Zwischengehäuses 27 mit einer Drehlagerstelle 41 für die Zwischenwelle 15 ausgebildet. Die Lagerwand 33 des Gehäusedeckels 29 weist zwei Lageröffnungen 43, 45 für die Getriebeeingangswelle 12 und für die Zwischenwelle 15 sowie einen Wellendurchtritt 47 auf, in der die rechte Flanschwelle 7 drehgelagert ist.

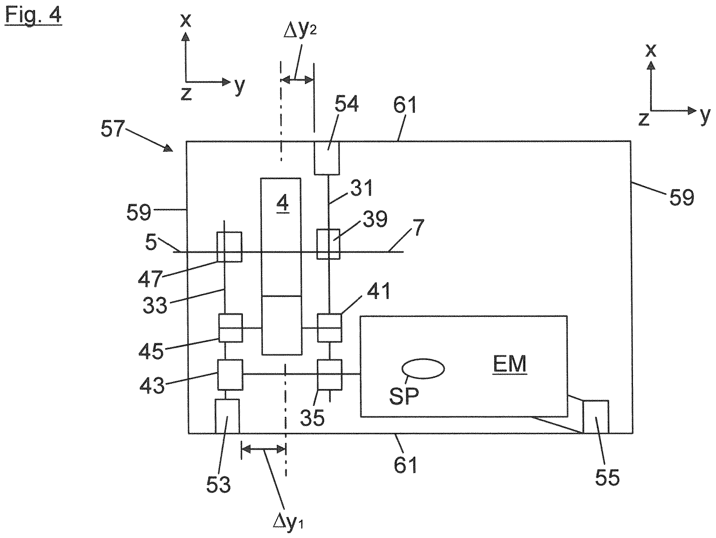

In der Fig. 4 ist eine Einbaulage des Antriebsaggregats 1 angedeutet. Demzufolge ist das Antriebsaggregat 1 in einer Dreipunktlagerung mit insgesamt drei Aggregatelagern 53, 54, 55 auf einem grob schematisch angedeuteten Hilfsrahmen 57 abgestützt. Der Hilfsrahmen 57 weist in der Fig. 4 zwei seitliche Hilfsrahmen-Längsträger 59 auf, die fahrzeugvorne und fahrzeughinten jeweils mit Hilfsrahmen-Querträgern 61 verbunden sind.

Der in Kern der Erfindung betrifft die Gestaltung der Dreipunktlagerung. Diese weist zwei getriebeseitige Aggregatelager 53, 54 auf, über die das Getriebegehäuse 25 auf dem Hilfsrahmen 57 abgestützt ist. Die beiden getriebeseitigen Aggregatelager 53, 54 sind mit Bezug auf die Flanschwellen-Achse F (Fig. 2) in der Fahrzeuglängsrichtung x auf gegenüberliegenden Seiten, das heißt fahrzeugvorne und fahrzeughinten, angeordnet. Beispielhaft ist in der Fig. 4 das erste getriebeseitige Aggregatelager 53 am hinteren Hilfsrahmen-Querträger 61 angebunden, während das zweite getriebeseitige Aggregatelager 54 am vorderen Hilfsrahmen-Querträger 61 angebunden ist. Das dritte Aggregatelager 55 ist dagegen am Statorgehäuse 23 angeordnet, wodurch in erster Linie die Elektromaschine EM abgestützt wird, in deren Bereich sich der Schwerpunkt SP des Antriebsaggregats 1 befindet.

Im Fahrzeugbetrieb werden über die Flanschwellen 5, 7 Reaktionskräfte F_{R} von den Fahrzeugrädern 9 in das Achsdifferenzial 4 und von dort weiter in das restliche Antriebsaggregat 1 eingeleitet. Für eine stabile Momentenabstützung der Reaktionskräfte F_{R} sind die beiden getriebeseitigen Aggregatelager 53, 54 in der Fahrzeugquerrichtung y betrachtet mit äußerst geringem Querversatz Δy₁, Δy₂ (Fig. 4) zum Achsdifferenzial 4 positioniert.

Die Aggregatelager 53, 54, 55 sind jeweils als Gummi-Metall-Hülsenlager realisiert, wie sie in der Fig. 3 angedeutet sind. Demzufolge weist jedes der gezeigten Aggregatelager 53, 54 einen inneren, hülsenförmigen Lagerkern 63 auf, der über einen Elastomerkörper 65 mit einer Außenhülse 67 verbunden ist. Der radial innere Lagerkern 63 ist über einen nicht gezeigten Lagerbolzen an Lagerkonsolen des Hilfsrahmens 57 anbindbar. Die Lagerachsen L der beiden getriebeseitigen Aggregatelager 53, 54 sowie des statorgehäuseseitigen Aggregatelagers 55 sind gemäß den Fig. 2 und 3 jeweils in Fahrzeugquerrichtung y ausgerichtet.

Wie aus der Fig. 3 oder 4 hervorgeht, ist das erste getriebeseitige Aggregatelager 53 am Gehäusedeckel 29 ausgebildet. Das erste getriebeseitige Aggregatelager 53 liegt zusammen mit der Lagerwand 33 des Gehäusedeckels 29 in einer gemeinsamen Ebene. Im Belastungsfall wirkt daher die Lagerwand 33 als ein bauteilsteifes Schubfeld. In gleicher Weise ist das zweite getriebeseitige Aggregatelager 54 am Zwischengehäuse 27 ausgebildet. Das zweite getriebeseitige Aggregatelager 54 liegt zusammen mit der Lagerwand 33 des Zwischengehäuses 27 in einer gemeinsamen Ebene, wodurch auch die Lagerwand 33 des Zwischengehäuses 27 im Belastungsfall als ein bauteilsteifes Schubfeld wirkt.

### BEZUGSZEICHENLISTE:

- 1: Antriebsaggregat
- 2: Getriebe
- 3: Stirnradstufe
- 4: Achsdifferenzial
- 5, 7: Flanschwellen
- 9: Fahrzeugräder
- 11: Rotorwelle
- 12: Getriebeeingangswelle
- 13: Festzahnrad
- 15: Zwischenwelle
- 17: Festzahnrad
- 23: Statorgehäuse
- 25: Getriebegehäuse
- 27: Zwischengehäuse
- 29: Gehäusedeckel
- 30: Getriebe-Innenraum
- 31: Lagerwand des Zwischengehäuses 27
- 33: Lagerwand des Getriebedeckels 29
- 35: Lageröffnung
- 39: Wellendurchtritt
- 41: Drehlagerstelle
- 43, 45: Lageröffnungen
- 47: Wellendurchtritt
- 49: Rotorwelle
- 51: Stator
- 53, 54, 55: Aggregatelager
- 57: Hilfsrahmen
- 59: Hilfsrahmen-Längsträger
- 61: Hilfsrahmen-Querträger
- 63: Innerer Lagerkern
- 65: Elastomerkörper
- 67: Außenhülse
- S1, S2: Schraubstellen
- L: Lagerachsen
- F: Flanschwellen-Achse
- Δy₁, Δy₂: Querversatz
- F_{R}: Reaktionskräfte

## Patentansprüche

1. Antriebsvorrichtung für eine elektrifizierte Fahrzeugachse eines zweispurigen Fahrzeugs, mit einem Antriebsaggregat (1), in dem eine Elektromaschine (EM) über ein Getriebe auf Fahrzeugräder (9) abtreibt, wobei die Elektromaschine (EM) im Quereinbau in der Fahrzeugachse angeordnet ist, wobei ein Statorgehäuse (23) der Elektromaschine (EM) in der Fahrzeugquerrichtung (y) mit einem Getriebegehäuse (25) axial verlängert ist, und wobei das Antriebsaggregat (1) in einer Dreipunktlagerung über drei Aggregatelager (53, 54, 55) in der Fahrzeugkarosserie abgestützt ist, wobei für eine Momentenabstützung von Reaktionskräften (F_{R}) die Dreipunktlagerung zwei getriebeseitige Aggregatelager (53, 54) aufweist, über die das Getriebegehäuse (25) in der Fahrzeugkarosserie abgestützt ist, wobei das Getriebegehäuse (25) aus zwei Gehäuseteilen aufgebaut ist, die in der Fahrzeugquerrichtung (y) axial hintereinander angeordnet sind, und zwar aus einem am Statorgehäuse (23) angeflanschten Zwischengehäuse (27) und einem Gehäusedeckel (29), der den Getriebegehäuse-Innenraum (30) schließt, wobei der Gehäusedeckel (29) und das Zwischengehäuse (27) jeweils Lagerwände (31, 33) aufweisen, die einander axial gegenüber liegen, wobei in den Lagerwänden (31, 33) des Gehäusedeckels (29) und des Zwischengehäuses (27) Getriebewellen (11, 12, 15) sowie Flanschwellen (5, 7) drehgelagert sind, wobei das erste getriebeseitige Aggregatelager (53) am Gehäusedeckel (29) ausgebildet ist, und wobei das zweite getriebeseitige Aggregatelager (54) am Zwischengehäuse (27) ausgebildet ist,
**dadurch gekennzeichnet, dass** jedes der Aggregatelager (53, 54) als ein Gummi-Metall-Hülsenlager ausgebildet ist, das in einem Befestigungsauge (69) des Getriebegehäuses (25) eingepresst ist, dass das erste getriebeseitige Aggregatelager (53) in einer Lagerwand-Ebene des Gehäusedeckels (29) liegt, und/oder dass das zweite getriebeseitige Aggregatelager (54) in einer Lagerwand-Ebene des Zwischengehäuses (27) liegt.

2. Antriebsvorrichtung nach Anspruch 1, **dadurch gekennzeichnet, dass** die Elektromaschine (EM) über eine Getriebestufe (2) mit einer Eingangsseite eines Achsdifferenzials (4) trieblich verbunden ist, das beidseitig in einer Fahrzeugquerrichtung (y) auf Flanschwellen (5, 7) abtreibt, die jeweils zu einem Fahrzeugrad (9) führen, und/oder dass die Elektromaschine (EM) achsparallel zu den Flanschwellen (5, 7) angeordnet ist, und/oder dass in dem Getriebegehäuse (25) die Getriebestufe (2) und das Achsdifferenzial (4) angeordnet sind, und/oder dass insbesondere im Fahrbetrieb die Flanschwellen (5, 7) Reaktionskräfte (F_{R}) über das Achsdifferenzial (4) in das Antriebsaggregat (1) einleiten.

3. Antriebsvorrichtung nach Anspruch 1 oder 2, **dadurch gekennzeichnet, dass** infolge der Ausbildung am Getriebegehäuse (25) jedes der getriebeseitige Aggregatelager (53, 54), in der Fahrzeugquerrichtung (y) betrachtet, mit möglichst geringem Querversatz (Δy₁, Δy₂) zum Achsdifferenzial (4) positionierbar ist.

4. Antriebsvorrichtung nach einem der vorhergehenden Ansprüche,
**dadurch gekennzeichnet, dass** das dritte Aggregatelager (55) am Statorgehäuse (23) ausgebildet ist.

5. Antriebsvorrichtung nach einem der vorhergehenden Ansprüche,
**dadurch gekennzeichnet, dass** die Lagerachsen (L) der beiden getriebeseitigen Aggregatelager (53, 54) sowie insbesondere zusätzlich des statorgehäuseseitigen Aggregatelagers (55) achsparallel zur Flanschwellen-Achse (F) ausgerichtet sind.

## Claims

1. Drive device for an electrified vehicle axle of a two-track vehicle, having a drive assembly (1) in which an electric machine (EM) outputs drive to vehicle wheels (9) via a transmission, wherein the electric machine (EM) is arranged in a transversely installed manner in the vehicle axle, wherein a stator housing (23) of the electric machine (EM) is extended axially in the vehicle transverse direction (y) by a transmission housing (25), and wherein the drive assembly (1) is supported with three-point mounting in the vehicle body via three assembly bearings (53, 54, 55), wherein, for support of torque with regard to reaction forces (F_{R}), the three-point mounting has two transmission-side assembly bearings (53, 54) via which the transmission housing (25) is supported in the vehicle body, wherein the transmission housing (25) is constructed from two housing parts, which are arranged axially one behind the other in the vehicle transverse direction (y), specifically from an intermediate housing (27), which is flange-mounted on the stator housing (23), and a housing cover (29), which closes the transmission-housing interior space (30), wherein the housing cover (29) and the intermediate housing (27) have respective bearing walls (31, 33), which are situated axially opposite one another, wherein transmission shafts (11, 12, 15) and flange shafts (5, 7) are mounted rotatably in the bearing walls (31, 33) of the housing cover (29) and the intermediate housing (27), wherein the first transmission-side assembly bearing (53) is formed on the housing cover (29), and wherein the second transmission-side assembly bearing (54) is formed on the intermediate housing (27),
**characterized in that** each of the assembly bearings (53, 54) is in the form of a rubber/metal sleeve bearing which is pressed in a fastening eyelet (69) of the transmission housing (25), **in that** the first transmission-side assembly bearing (53) is in a bearing-wall plane of the housing cover (29), and/or **in that** the second transmission-side assembly bearing (54) is in a bearing-wall plane of the intermediate housing (27).

2. Drive device according to Claim 1, **characterized in that** the electric machine (EM) is connected in terms of drive to an input side of an axle differential (4) via a transmission stage (2), which axle differential outputs drive to flange shafts (5, 7), which each lead to a vehicle wheel (9), on both sides in a vehicle transverse direction (y), and/or **in that** the electric machine (EM) is arranged axially parallel to the flange shafts (5, 7), and/or **in that** the transmission stage (2) and the axis differential (4) are arranged in the transmission housing (25), and/or **in that** the flange shafts (5, 7) introduce reaction forces (F_{R}) into the drive assembly (1) via the axle differential (4), in particular during driving operation.

3. Drive device according to Claim 1 or 2, **characterized in that**, as a result of being formed on the transmission housing (25), each of the transmission-side assembly bearings (53, 54) is able to be positioned with the smallest possible transverse offset (Δy₁, Δy₂) from the axle differential when viewed in the vehicle transverse direction (y).

4. Drive device according to one of the preceding claims, **characterized in that** the third assembly bearing (55) is formed on the stator housing (23).

5. Drive device according to one of the preceding claims, **characterized in that** the bearing axes (L) of the two transmission-side assembly bearings (53, 54) and in particular additionally of the stator-housing-side assembly bearing (55) are oriented axially parallel to the flange-shaft axis (F).

## Revendications

1. Dispositif d'entraînement pour un essieu de véhicule électrifié d'un véhicule à deux voies, avec un groupe d'entraînement (1) dans lequel une machine électrique (EM) est entraînée sur des roues de véhicule (9) par l'intermédiaire d'une transmission, la machine électrique (EM) étant agencée en montage transversal dans l'essieu de véhicule, un boîtier de stator (23) de la machine électrique (EM) étant prolongé axialement dans la direction transversale du véhicule (y) par un boîtier de transmission (25), et le groupe d'entraînement (1) étant supporté dans un montage à trois points par l'intermédiaire de trois paliers de groupe (53, 54, 55) dans la carrosserie de véhicule, le montage à trois points présentant deux paliers de groupe (53, 54) côté transmission, par l'intermédiaire desquels le boîtier de transmission (25) est supporté dans la carrosserie de véhicule, pour un support de couple de forces de réaction (FR), le boîtier de transmission (25) étant construit à partir de deux parties de boîtier qui sont agencées axialement l'une derrière l'autre dans la direction transversale du véhicule (y), à savoir un boîtier intermédiaire (27) bridé sur le boîtier de stator (23) et un couvercle de boîtier (29), qui ferme l'espace intérieur (30) du boîtier de transmission, le couvercle de boîtier (29) et le boîtier intermédiaire (27) présentant chacun des parois de palier (31, 33) qui sont axialement opposées l'une à l'autre, des arbres de transmission (11, 12, 15) ainsi que des arbres de bride (5, 7) étant montés en rotation dans les parois de palier (31, 33) du couvercle de boîtier (29) et du boîtier intermédiaire (27), le premier palier de groupe (53) côté transmission étant réalisé sur le couvercle de boîtier (29), et le deuxième palier de groupe (54) côté transmission étant réalisé sur le boîtier intermédiaire (27),
**caractérisé en ce que** chacun des paliers de groupe (53, 54) est réalisé sous forme de palier à douille caoutchouc-métal qui est enfoncé dans un œillet de fixation (69) du boîtier de transmission (25), **en ce que** le premier palier de groupe (53) côté transmission se situe dans un plan de paroi de palier du couvercle de boîtier (29), et/ou **en ce que** le deuxième palier de groupe (54) côté transmission se situe dans un plan de paroi de palier du boîtier intermédiaire (27).

2. Dispositif d'entraînement selon la revendication 1, **caractérisé en ce que** la machine électrique (EM) est reliée en entraînement, par l'intermédiaire d'un étage de transmission (2), à un côté d'entrée d'un différentiel d'essieu (4) qui est entraîné, des deux côtés, dans une direction transversale du véhicule (y), sur des arbres de bride (5, 7) qui mènent chacun à une roue de véhicule (9), et/ou **en ce que** la machine électrique (EM) est agencée en parallélisme axial avec les arbres de bride (5, 7), et/ou **en ce que** l'étage de transmission (2) et le différentiel d'essieu (4) sont agencés dans le boîtier de transmission (25), et/ou **en ce que**, notamment en mode de déplacement, les arbres de bride (5, 7) introduisent des forces de réaction (FR) dans le groupe d'entraînement (1) par l'intermédiaire du différentiel d'essieu (4).

3. Dispositif d'entraînement selon la revendication 1 ou 2, **caractérisé en ce qu'**en raison de la réalisation sur le boîtier de transmission (25), chacun des paliers de groupe (53, 54) côté transmission peut être positionné, vu dans la direction transversale du véhicule (y), avec un décalage transversal (Δy₁, Δy₂) aussi faible que possible par rapport au différentiel d'essieu (4).

4. Dispositif d'entraînement selon l'une quelconque des revendications précédentes, **caractérisé en ce que** le troisième palier de groupe (55) est réalisé sur le boîtier de stator (23).

5. Dispositif d'entraînement selon l'une quelconque des revendications précédentes, **caractérisé en ce que** les axes de palier (L) des deux paliers de groupe (53, 54) côté transmission ainsi que, notamment en outre, du palier de groupe (55) côté boîtier de stator sont orientés en parallélisme axial avec l'axe (F) de l'arbre de bride.
